(19) Europäisches Patentamt / European Patent Office / Office européen des brevets

(11) **EP 2 546 056 A1**

(12) **EUROPEAN PATENT APPLICATION**
published in accordance with Art. 153(4) EPC

(43) Date of publication:
**16.01.2013  Bulletin 2013/03**

(51) Int Cl.:
**B32B 27/00** (2006.01)     **B32B 27/32** (2006.01)

(21) Application number: **11753123.6**

(22) Date of filing: **09.02.2011**

(86) International application number:
**PCT/JP2011/052747**

(87) International publication number:
**WO 2011/111461 (15.09.2011 Gazette 2011/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2010  JP 2010055493**

(71) Applicant: **Idemitsu Unitech Co. Ltd.**
**Tokyo 108-0014 (JP)**

(72) Inventor: **FUNAKI Akira**
**Ichihara-shi**
**Chiba 299-0193 (JP)**

(74) Representative: **Smee, Anthony James Michael**
**Gill Jennings & Every LLP**
**The Broadgate Tower**
**20 Primrose Street**
**London EC2A 2ES (GB)**

(54) **METHOD FOR MANUFACTURING TRANSPARENT LAMINATED SHEET, AND TRANSPARENT LAMINATED SHEET**

(57) In a manufacturing method of a transparent laminated sheet (2) of the invention, the transparent laminated sheet (2) includes a first base layer (2a) that is formed by a crystalline resin and a second base layer (2b) that is provided on at least one surface of the first base layer (2a) and is formed of a crystalline resin. The crystalline resin for the second base layer (2b) has a larger melt flow rate and a shorter relaxation time than the crystalline resin for the first base layer (2a). The transparent laminated sheet (2) is formed by rapidly cooling the crystalline resin for the first base layer (2a) and the crystalline resin for the second base layer (2b) immediately after being respectively extruded from dies (10) in a melted state.

[Fig. 1]

EP 2 546 056 A1

**Description**

TECHNICAL FIELD

The present invention relates to a manufacturing method of a transparent laminated sheet and the transparent laminated sheet.

BACKGROUND ART

When a crystalline resin typified by polypropylene is processed to form a film by a typical film formation method, the obtained film is opaque due to high crystallinity (e.g., a crystallinity degree, a crystallization speed, and a spherulite size) of the crystalline resin. In order to obtain a transparent film sheet of the crystalline resin, as disclosed in Patent Literature 1, a typical polymer design technique of blending an additive (a nucleating agent) is taken so that a number of fine crystals are made to suppress growth of spherulites.

Another way to obtain transparency is exemplified by a rapid cooling using a belt process using a belt as disclosed in Patent Literature 2. The transparency is given through a sheet formation process in which polypropylene in a melted state is interposed and pressed between a belt and a roller which are kept at lower temperatures and is rapidly cooled. By rapidly cooling polypropylene in a melted state, growth of crystals is suppressed to achieve a low crystallization and fine-spherulite formation. Thus, even though a nucleating agent is not blended, the obtained sheet exhibits a higher transparency than transparency of a sheet manufactured with a nucleating agent.

A polypropylene resin sheet disclosed in Patent Literature 3 exhibits a high transparency and impact resistance by blending a specific linear low-density polyethylene with polypropylene for rapidly cooling.

CITATION LIST

PATENT LITERATURE(S)

Patent Literature 1: Japanese Patent No. 3725955
Patent Literature 2: Japanese Patent No. 4237275
Patent Literature 3: JP-A-2006-297876

SUMMARY OF THE INVENTION

PROBLEMS TO BE SOLVED BY THE INVENTION

In a nucleating agent-containing polypropylene sheet disclosed in Patent Literature 1, although transparency is improved as compared with that of a typical polypropylene sheet, whitening is not completely resolved. Accordingly, for the application of the nucleating agent-containing polypropylene sheet to a use in which further transparency is required, further improvement in transparency is desired.

Since polypropylene is inherently a crystalline resin, thermal molding of polypropylene is considered difficult because of rapid decline of a viscosity of polypropylene near a melting point. Accordingly, when the nucleating agent is added, a crystallinity degree of polypropylene is increased to further narrow a range where polypropylene can be thermally molded, so that thermal molding of polypropylene may become more difficult.

In the sheet obtained through the belt process as disclosed in Patent Literature 2 or a sheet obtained through an extrusion and cooling process by a water cooling method, a number of spherulites are formed near the sheet surface. Existence of the spherulites may decrease transparency of the sheet.

Even when a specific linear low-density polyethylene is blended with polypropylene as disclosed in Patent Literature 3, further improvement in transparency is desired. Moreover, since a composition of Patent Literature 3 requires a raw material other than polypropylene to be blended, the composition is not of a mono-material, so that recycling of the sheet is difficult.

Accordingly, decrease in formation of spherulites is crucial for obtaining further transparency. Owing to intense study of the inventor, it has been found that controlling stress applied on the resin in extrusion causes a change to crystals to be formed in later rapid-cooling.

The invention has been achieved based on this finding.

An object of the invention is to provide a manufacturing method capable of improving transparency of a transparent laminated sheet and to provide the transparent laminated sheet.

MEANS FOR SOLVING THE PROBLEMS

According to an aspect of the invention, a manufacturing method of a transparent laminated sheet including a first base layer that is formed of a crystalline resin and a second base layer that is formed of a crystalline resin and is provided on at least one surface of the first base layer includes: as the crystalline resin for forming the second base layer, using a crystalline resin having a larger melt flow rate and a shorter relaxation time than the crystalline resin for forming the first base layer; and rapidly cooling the crystalline resin for forming the first base layer and the crystalline resin for forming the second base layer in a laminated state immediately after being extruded into a form of a sheet in a melted state.

In the invention according to the above aspect of the invention, it is preferable that the crystalline resins for the first base layer and the second base layer are of the same type.

Moreover, in the invention according to the above aspect of the invention, it is preferable that both the first base layer and the second base layer are made of polypropylene resins.

A transparent laminated sheet according to another aspect of the invention is obtained by the manufacturing method of the transparent laminated sheet according to the above aspect of the invention.

According to still another aspect of the invention, a transparent laminated sheet includes a first base layer that is formed of a crystalline resin and a second base layer that is formed of a crystalline resin and is provided on at least one surface of the first base layer, in which the crystalline resin for forming the second base layer has a larger melt flow rate and a shorter relaxation time than the crystalline resin for forming the first base layer; and an internal haze of the transparent laminated sheet comprising the second base layer is 10% or more lower than an internal haze of the transparent laminated sheet formed by a single layer of the first base layer.

ADVANTAGE(S) OF THE INVENTION

In the invention, the transparent laminated sheet includes the first base layer and the crystalline-resin second base layer formed on at least one surface of the first base layer, in which the crystalline resin for forming the second base layer has a larger MFR and a shorter relaxation time than the crystalline resin for forming the first base layer. Accordingly, in the crystalline resin for the second base layer, stress applied on the sheet surface during extrusion is likely to be relaxed, so that nucleation caused by stress orientation can be suppressed.

Moreover, in the invention, since a nucleating agent is not added, there is no possibility that a crystallinity degree of the crystalline resin is increased to narrow a range where the crystalline resin can be thermally molded and thermal molding of the crystalline resin may become more difficult.

Accordingly, according to the manufacturing method of the transparent laminated sheet of the invention, transparency is improvable (i.e., haze is reducible) without blending a nucleating agent as compared with transparency of a transparent laminated sheet formed only by extruding the first base layer.

BRIEF DESCRIPTION OF DRAWINGS

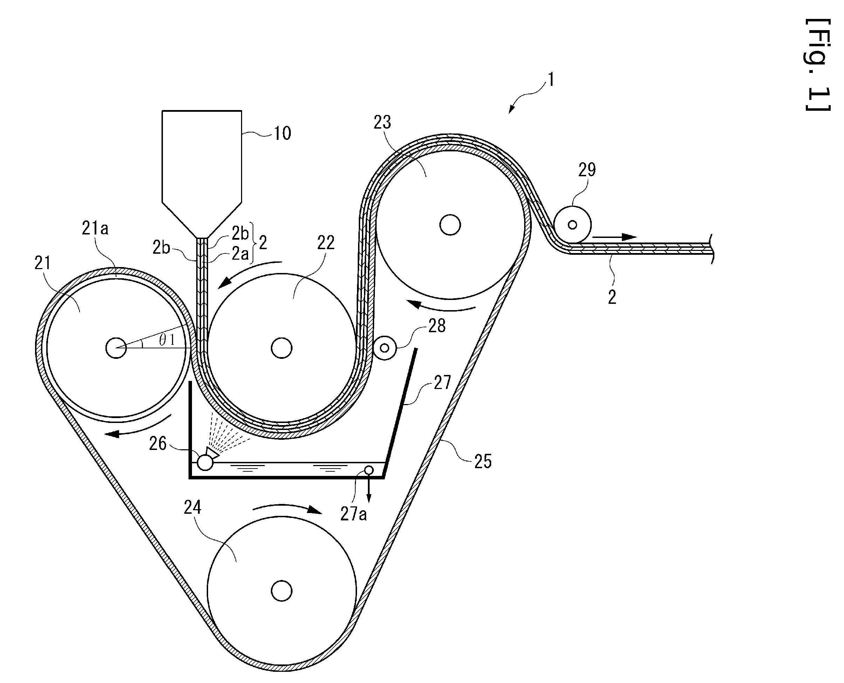

Fig. 1 is a schematic view showing a drawing portion for describing a manufacturing method of a transparent laminated sheet according to an exemplary embodiment.

DESCRIPTION OF EMBODIMENT(S)

A manufacturing method of a polypropylene resin sheet 2 according to an exemplary embodiment will be described below with reference to Fig. 1.

Arrangement of Manufacturing Device

A manufacturing device 1 shown in Fig. 1 includes an existing extruder (not shown) such as a single screw extruder or a multi-screw extruder, in which a T-die 10 for sheet molding is provided to a tip end of the extruder. A resin sheet 2 (a transparent laminated sheet) has a three-layer laminate structure. Two kinds of polypropylene resins are used as a raw resin. An inner layer 2a (a first base layer) is made of a polypropylene resin. An outer layer 2b (a second base layer) that is formed on both surfaces of the inner layer 2a is made of a polypropylene resin having a larger MFR and a shorter relaxation time than the polypropylene resin of the inner layer 2a. Specifically, MFR of the outer layer 2b is preferably 1.5 times or more larger than MFR of the inner layer 2a. When MFR of the outer layer 2b is less than 1.5 times, improvement in transparency is small. Moreover, the relaxation time of the outer layer 2b is preferably 80% or less of the relaxation time of the inner layer 2a. When the relaxation time of the outer layer 2b exceeds 80%, improvement in transparency is small.

The respective raw resins for the inner layer 2a and the outer layer 2b may be provided in a form of pellets.

MFR is measured at a measurement temperature of 230 degrees C under a load of 2.16 kg in accordance with JIS-K7210.

The relaxation time ($\tau$) is obtained as a relaxation time at an angular frequency $\omega$=0.01 rad/sec when frequency dispersion is measured at a temperature of 175 degrees C using a rotational rheometer (manufactured by Rheometrics, Inc) having a cone plate of a 25-mm diameter and a cone angle of 0.1 radian (rad). Specifically, a complex modulus $G^*(i\omega)$ of resin pellets is measured and defined by a relation ($\sigma^*/\gamma^*$) between stress $\sigma^*$ and distortion $\gamma^*$ as shown in the following formula (1). The relaxation time $\tau$ is obtained by the following formula (2).

$$G^*(i\omega)=\sigma^*/\gamma^*=G'(\omega)+iG''(\omega) \qquad (1)$$

$$\tau(\omega)=G'(\omega)/\omega G''(\omega) \qquad (2)$$

In the formulae, G' represents a storage modulus and G'' represents a loss modulus.

The relaxation time $\tau$ will be described here in detail.

After an external force is applied on a substance system in a balanced state to bring the substance system into another balanced state or a steady state, the external force is removed, which causes the substance system to return to the initial balanced state because of an internal movement of the substance system. Such a phenomenon is referred to as a relaxation phenomenon. A characteristic time coefficient that is a standard required time for relaxation is referred to as a relaxation time. For polymer molding (e.g., extrusion molding), the melted polymers are flowed, in which molecular chains are drawn and aligned (oriented) in a flow direction. When the polymers finish flowing and begin to be cooled, no stress is applied on the molecules, so that the molecular chains begin to move to eventually orient in random directions (which is referred to as relaxation of molecular chains).

The relaxation time is relevant to probability that the molecular chains oriented in an extrusion direction during the extrusion molding are returned to the random orientations. A short relaxation time shows that the molecular chains are easily returned to the random orientations.

Note that, although the resin sheet 2 in this exemplary embodiment is formed by three layers, an arrangement of the resin sheet 2 is not limited to this. The resin sheet 2 may be formed by two layers in which the outer layer 2b is formed on a surface of the inner layer 2a, or may be formed by four or more layers. Although two kinds of polypropylene resins are used, three or more kinds may be used.

Pellets of these polypropylene resins are fed into a hopper of each extruder and are melted and kneaded. Subsequently, the polypropylene resins are laminated by a feed block method, a multi-manifold die method or the like.

The T-die 10 is exemplified by a coat hanger die and a slot tie. Any dies capable of forming a multi-layered sheet is applicable.

The manufacturing device 1 shown in Fig. 1 includes a first cooling roller 21, a second cooling roller 22, a third cooling roller 23, a fourth cooling roller 24, an endless belt 25, a cooling-water-spraying nozzle 26, a water bath 27, a water absorption roller 28 and a peeling roller 29.

A surface of the first cooling roller 21 is covered with an elastic member 21a made of a material such as nitrile-butadiene rubber (NBR). The elastic member 21a preferably has a hardness of 80 degrees or less (measured by a method in accordance with JIS K6301A) and a thickness of about 10 mm.

Note that a rotating shaft of at least one of the first, third and fourth cooling rollers 21, 23 and 24 is connected to a rotary driver (not shown).

The second cooling roller 22 is a metallic roller having a mirror-finished surface (a mirror-finished cooling roller) of a surface roughness (Rmax: based on "Definition and Designation of Surface Roughness" in accordance with JIS B 0601) of 0.3 $\mu$m or less. The second cooling roller 22 houses therein a cooler such as a water-cooling cooler (not shown) for adjusting a temperature of the surface. When the surface roughness (Rmax) of the second cooling roller 22 exceeds 0.3 $\mu$m, glossiness and transparency of the obtained resin sheet 2 may be decreased.

The second cooling roller 22 is disposed such that the inner layer 2a and the outer layer 2b melt-extruded from the T-die 10 are interposed between the first and second cooling rollers 21 and 22 via a metallic endless belt 25 made of stainless steel or the like.

A surface of the endless belt 25 abutting on the inner layer 2a and the outer layer 2b melt-extruded from the T-die 10 is a mirror-finished surface having a surface roughness (Rmax) of 0.3 $\mu$m or less. The endless belt 25 is rotatably wound around the first, third and fourth cooling rollers 21, 23 and 24.

Herein, the third and fourth cooling rollers 23 and 24 can be provided by a metallic roller. With such an arrangement that the third and fourth cooling rollers 23 and 24 house therein a cooler (not shown) such as a water-cooling cooler, the temperature of the endless belt 25 is adjustable.

The cooling-water-spraying nozzle 26 is provided under a lower surface of the second cooling roller 22. With cooling-water-spraying nozzle 26, the cooling water is sprayed on a back surface of the endless belt 25. Thus, by spraying cooling water onto the endless belt 25 through the cooling-water-spraying nozzle 26, not only the endless belt 25 is rapidly cooled, but also the inner layer 2a and the outer layer 2b that are sheet-pressed by the first and second cooling rollers 21 and 22 can be rapidly cooled.

The water bath 27, which is formed in a box having an open upper surface, is provided so as to cover the entire lower surface of the second cooling roller 22. The water bath 27 collects the cooling water sprayed on the back surface of the endless belt 25 and discharges the collected cooling water from a discharge hole 27a formed on a lower side of the water bath 27.

The water absorption roller 28 is provided on a lateral side of the second cooling roller 22 near the third cooling roller 23 in contact with the endless belt 25. The water absorption roller 28 removes extra cooling water attached on the back surface of the endless belt 25.

The peeling roller 29 is disposed to guide the inner layer 2a and the outer layer 2b to the third cooling roller 23 and the endless belt 25 and peels the inner layer 2a and the outer layer 2b (the resin sheet 2) from the endless belt 25 after being cooled.

Although the peeling roller 29 may be disposed to press the inner layer 2a and the outer layer 2b (the resin sheet 2) toward the third cooling roller 23, the peeling roller 29 is preferably disposed separately from the third cooling roller 23 as shown, thereby avoiding pressing the inner layer 2a and the outer layer 2b (the resin sheet 2).

According to the manufacturing device with this arrangement, a transparent polypropylene resin sheet will be manufactured as follows.

Firstly, a temperature of each of the cooling rollers 22, 23 and 24 is controlled in advance so that a surface temperature of each of the second cooling roller 22 and the endless belt 25 which cool the inner layer 2a and the outer layer 2b in direct contact therewith is kept in a range from a dew point to 50 degrees C, preferably to 30 degrees.

When the surface temperature of each of the second cooling roller 22 and the endless belt 25 is the dew point or less, condensation may generate on the surface to possibly make it difficult to form a uniform sheet. On the other hand, when the surface temperature exceeds 50 degrees C, transparency of the obtained resin sheet 2 is reduced and alpha crystals are increased to possibly make it difficult to thermally mold the resin sheet 2.

Next, the inner layer 2a and the outer layer 2b are melt-extruded through the T-die 10 of the extruder and are interposed between the endless belt 25 and the second cooling roller 22 on the first cooling roller 21. Under this condition, the inner layer 2a and the outer layer 2b are sheet-pressed and rapidly cooled by the first and second cooling rollers 21 and 22.

At this time, the elastic member 21a with which the surface of the first cooling roller 21 is covered is compressed to be elastically deformed. In such an elastically deformed area of the elastic member 21a, specifically, an arc area corresponding to a central angle $\theta1$ of the first cooling roller 21, the inner layer 2a and the outer layer 2b are sheet-pressed by the first and second cooling rollers 21 and 22.

A face pressure at this time is preferably in a range of 0.1 to 20 MPa.

Subsequently, the inner layer 2a and the outer layer 2b interposed between the second cooling roller 22 and the endless belt 25 are sheet-pressed by the second cooling roller 22 and the endless belt 25 in an arc area corresponding to a substantially lower half of the second cooling roller 22 and are further rapidly cooled by cooling water sprayed on the back surface of the endless belt 25 by the cooling-water-spraying nozzle 26.

A face pressure at this time is preferably in a range of 0.01 to 0.5 MPa and a temperature of the cooling water is preferably in a range of 0 to 30 degrees C. The sprayed cooling water is collected in the water bath 27 while the collected water is discharged from the discharge hole 27a.

After the inner layer 2a and the outer layer 2b are sheet-pressed between the second cooling roller 22 and the endless belt 25 and are cooled, the inner layer 2a and the outer layer 2b in close contact with the endless belt 25 are transferred onto the third cooling roller 23 as the endless belt 25 is rotated. The inner layer 2a and the outer layer 2b are guided by the peeling roller 29 and rapidly cooled in an arc area corresponding to a substantially upper half of the third cooling roller 23.

The water attached on the back surface of the endless belt 25 is removed by the water absorption roller 28 provided between the second cooling roller 22 and the third cooling roller 23.

The inner layer 2a and the outer layer 2b after being cooled on the third cooling roller 23, in other words, the resin sheet 2 formed by rapidly cooling the inner layer 2a and the outer layer 2b is peeled off the endless belt 25 and is wound by a winding roller (not shown) at a predetermined speed.

According to the above manufacturing method, the three-layer resin sheet 2 including the inner layer 2a and the outer layers 2b formed on both the surfaces of the inner layer 2a is obtained.

A total thickness of the resin sheet 2 is 160 µm or more and less than 500 µm. When the total thickness of the resin sheet 2 is less than 160 µm, since the cooling rollers 21, 22, 23 and 24 are sufficiently effective for rapidly cooling the resin sheet 2, it is not necessary to form a lamination for obtaining transparency. When the total thickness of the resin sheet 2 is 500 µm or more, rapid cooling through conduction of heat cannot be expected, so that advantages of lamination cannot be obtained.

Advantages of Embodiment(s)

According to the exemplary embodiment, the following advantages can be attained.

According to the exemplary embodiment, the resin sheet 2 includes the inner layer 2a and the outer layer 2b formed on both the surfaces of the inner layer 2a, in which a polypropylene resin for forming the outer layer 2b has a larger MFR and a shorter relaxation time than a polypropylene resin for forming the inner layer 2a.

Since the polypropylene resin for the outer layer 2b has a larger MFR and a shorter relaxation time than a polypropylene resin for the inner layer 2a, stress applied on the sheet surface during extrusion is likely to be relaxed, so that nucleation caused by stress orientation can be suppressed.

Moreover, in the exemplary embodiment, since a nucleating agent is not added, there is no possibility that a crystallinity degree of the crystalline resin is increased to narrow a range where the crystalline resin can be thermally molded and thermal molding of the crystalline resin may become more difficult.

Accordingly, in the manufacturing method of the resin sheet 2 according to the exemplary embodiment, transparency is improvable (i.e., haze is reducible) without blending a nucleating agent.

In the exemplary embodiment, the resin sheet 2 has a three-layer laminate structure, in which two kinds of polypropylene resins are used as the raw resin. Accordingly, since the obtained resin sheet 2 is a mono-material, the resin sheet 2 can be easily recycled.

In the exemplary embodiment, a thickness of the outer layer 2b is 30% or less of the total thickness of the resin sheet 2. With this arrangement, an influence caused by haze of the outer layer 2b can be reduced, thereby significantly improving transparency.

In the exemplary embodiment, the total thickness of the resin sheet 2 is 160 µm or more and less than 500 µm. This arrangement avoids the possibility that a lamination structure is not useful for obtaining transparency since the cooling rollers 21, 22, 23 and 24 are sufficiently effective for rapidly cooling the resin sheet 2 when the total thickness of the resin sheet 2 is less than 160 µm, or the possibility that advantages of lamination cannot be obtained since rapid cooling by conduction of heat cannot be expected when the total thickness of the resin sheet 2 is 500 µm or more. Accordingly, transparency can be effectively improved.

It should be noted that the embodiment described above is only an exemplary embodiment of the invention. The invention is not limited to the above-described embodiment but includes modifications and improvements as long as an object and advantages of the invention can be attained.

For instance, although the crystalline resins used for the inner layer 2a and the outer layer 2b are the same polypropylene resins in the exemplary embodiment, the crystalline resins are not limited to this. Specifically, a crystalline resin other than the polypropylene resin may be used, or the crystalline resins to be used may not be of the same type.

Although the inner layer 2a and the outer layer 2b are rapidly cooled with the cooling water, any arrangement is applicable as long as the inner layer 2a and the outer layer 2b can be rapidly cooled.

Examples

The invention will further be described below with reference to examples and comparatives. The invention is not limited to details of Examples and the like.

Examples 1 to 7

Under specific conditions of the manufacturing device and the manufacturing method as follows, the resin sheets having a laminate structure were manufactured of the raw resins in Table 1. Table 2 shows a layer structure of the resin sheet, a total thickness thereof and a thickness of each layer thereof in each of Examples.

[Table 1]

| No. | polypropylene resin grade | MFR (g/10min) | relaxation time (sec) |
|---|---|---|---|
| A1 | E103WA made by Prime Polymer Co., Ltd. | 3 | 12.2 |

(continued)

| No. | polypropylene resin grade | MFR (g/10min) | relaxation time (sec) |
|---|---|---|---|
| A2 | F300SV made by Prime Polymer Co., Ltd. | 3 | 11.5 |
| B1 | Y2000GP made by Prime Polymer Co., Ltd. | 20 | 2.7 |
| B2 | F704NP made by Prime Polymer Co., Ltd. | 7 | 8.0 |

MFR was measured at a measurement temperature of 230 degrees C and a load of 2.16 kg in accordance with JIS-K7210.

The relaxation time ($\tau$) was obtained as a relaxation time at an angular frequency $\omega$=0.01 rad/sec when frequency dispersion was measured at a temperature of 175 degrees C using a rotational rheometer (manufactured by Rheometrics, Inc) having a cone plate of a 25-mm diameter and a cone angle of 0.1 radian (rad). Specifically, a complex modulus $G^*$ ($i\omega$) of resin pellets was measured and defined by a relation ($\sigma^*/\gamma^*$) between stress $\sigma^*$ and distortion $\gamma^*$ as shown in the following formula (1). The relaxation time $\tau$ was obtained by the following formula (2).

$$G^*(i\omega)=\sigma^*/\gamma^*=G'(\omega)+iG''(\omega) \qquad (1)$$

$$\tau(\omega)=G'(\omega)/\omega G''(\omega) \qquad (2)$$

In the formulae, G' represents a storage modulus and G" represents a loss modulus.

Dimensions of the extruder, operation conditions and the like are shown below.

- Extruder: 90-mm diameter for the first base layer, 50-mm diameter for the second base layer
- Width of the coat hanger die: 900 mm
- Surface roughness of the cooling roller and the roller: Rmax=0.1$\mu$m
- Endless belt: material precipitation-hardening stainless steel, surface roughness of Rmax=0.1$\mu$m, width of 900 mm, length of 7700 mm, thickness of 0.8 mm
- Temperature of the belt and the mirror-finished roller with which the melted sheet was brought into contact: 16 degrees C
- Drawing speed: 10 m/min
- Sheet width: 780 mm
- Lamination according to the feed block method

Comparatives 1 to 9

In Comparatives 1 to 9, although resin sheets having a laminate structure were manufactured in the same manner as in Examples, the resin sheets were different from those in Examples in the layer structure and/or the total thickness. Details are shown in Table 2.

Evaluation of Properties

The propylene resin sheets in Examples 1 to 7 and Comparatives 1 to 9 were measured in haze (a total haze and an internal haze). Results are shown in Table 2.

Using haze measuring equipment (NDH-300A manufactured by NIPPON DENSHOKU INDUSTRIES CO., LTD), the haze was calculated according to the following formula (3) using a ratio between a total light transmissivity (Tt) representing the total amount of transmitted light among light irradiated on a sheet and a diffused light transmissivity (Td) representing transmitted light among light diffused by the sheet. The total light transmissivity (Tt) is sum of a parallel light transmissivity representing transmitted light coaxially with incident light and the diffused light transmissivity (Td).

$$\text{Haze (H)}=Td/Tt\times100 \qquad (3)$$

After coating silicone oil on both sides of the sheet and interposing both the sides of the sheet between glass plates, the internal haze was measured while eliminating exterior influences of the sheet.

Total haze=Internal haze+External haze

The evaluation results are shown in Table 2.
[Table 2]

| | layer structure | totalthickness ($\mu$ m) | thickness of each layer ($\mu$ m) | total haze (%) | internal haze (%) | haze ratio (%) |
|---|---|---|---|---|---|---|
| Example 1 | B1/A1/B1 | 350 | 20/310/20 | 5.7 | 5 | 54.9 |
| Example 2 | B2/A1/B2 | 350 | 20/310/20 | 6.6 | 5.6 | 61.5 |
| Example 6 | B1/A1 | 350 | 30/320 | 8.5 | 7.7 | 84.6 |
| Camp. 1 | A1/A1/A1 | 350 | 20/310/20 | 9.8 | 9.1 | 100 |
| Example 3 | B1/A2/B1 | 350 | 20/310/20 | 16.4 | 15.2 | 66.1 |
| Comp. 2 | A2/A2/A2 | 350 | 20/310/20 | 23.8 | 23 | 100 |
| Example 4 | B1/A1/B1 | 450 | 40/370/40 | 18.7 | 18 | 66.2 |
| Comp. 3 | A1/A1/A1 | 450 | 40/370/40 | 30 | 27.2 | 100 |
| Example 5 | B1/A1/B1 | 200 | 10/180/10 | 1.5 | 1 | 83.3 |
| Comp. 4 | A1/A1/A1 | 200 | 10/180/10 | 1.8 | 1.2 | 100 |
| Example 7 | B1/A1/B1 | 300 | 20/260/20 | 2.7 | 1.8 | 81.8 |
| Comp. 5 | A1/A1/A1 | 300 | 20/260/20 | 3.2 | 2.2 | 100 |
| Comp. 6 | B1/A1/B1 | 150 | 10/130/10 | 1.3 | 0.7 | 100 |
| Comp. 7 | A1/A1/A1 | 150 | 10/130/10 | 1.3 | 0.7 | 100 |
| Comp. 8 | B1/A1/B1 | 550 | 40/470/40 | 42.5 | 39.3 | 92.2 |
| Comp. 9 | A1/A1/A1 | 550 | 40/470/40 | 45.3 | 42.6 | 100 |

As shown in Table 2, it was found that lamination of two layer or more for the resin sheet could reduce the haze ratio by 10% or more.
It was also found that the resin sheet could provide a significant improvement in transparency when the total thickness of the resin sheet is from 160 $\mu$m to 500 $\mu$m.

INDUSTRIAL APPLICABILITY

The invention is applicable to packaging of foods, medicines, cosmetics and the like.

EXPLANATION OF CODES

2:    resin sheet (transparent laminated sheet)
2a:    inner layer (first base layer)
2b:    outer layer (second base layer)
10:    T-die (dies)

**Claims**

1.   A manufacturing method of a transparent laminated sheet comprising a first base layer that is formed of a crystalline resin and a second base layer that is formed of a crystalline resin and is provided on at least one surface of the first base layer, the method comprising:

as the crystalline resin for forming the second base layer, using a crystalline resin having a larger melt flow rate and a shorter relaxation time than the crystalline resin for forming the first base layer; and rapidly cooling the crystalline resin for forming the first base layer and the crystalline resin for forming the second base layer in a laminated state immediately after being extruded into a form of a sheet in a melted state.

2. The manufacturing method of the transparent laminated sheet according to claim 1, wherein the crystalline resins for the first base layer and the second base layer are of the same type.

3. The manufacturing method of the transparent laminated sheet according to claim 1 or 2, wherein both the first base layer and the second base layer are made of polypropylene resins.

4. A transparent laminated sheet obtained by the manufacturing method of the transparent laminated sheet according to any one of claims 1 to 3.

5. A transparent laminated sheet comprising a first base layer that is formed of a crystalline resin and a second base layer that is formed of a crystalline resin and is provided on at least one surface of the first base layer, wherein the crystalline resin for forming the second base layer has a larger melt flow rate and a shorter relaxation time than the crystalline resin for forming the first base layer; and an internal haze of the transparent laminated sheet comprising the second base layer is 10% or more lower than an internal haze of the transparent laminated sheet formed by a single layer of the first base layer.

[Fig. 1]

| **INTERNATIONAL SEARCH REPORT** | | International application No. |
|---|---|---|
| | | PCT/JP2011/052747 |

| A.  CLASSIFICATION OF SUBJECT MATTER |
|---|
| *B32B27/00*(2006.01)i, *B32B27/32*(2006.01)i |
| According to International Patent Classification (IPC) or to both national classification and IPC |

| B.  FIELDS SEARCHED |
|---|
| Minimum documentation searched (classification system followed by classification symbols) |
| B32B1/00-43/00, B29C47/00-47/96, C08J5/00-5/02, 5/12-5/22 |

Documentation searched other than minimum documentation to the extent that such documents are included in the fields searched
    Jitsuyo Shinan Koho       1922-1996   Jitsuyo Shinan Toroku Koho   1996-2011
    Kokai Jitsuyo Shinan Koho   1971-2011   Toroku Jitsuyo Shinan Koho   1994-2011

Electronic data base consulted during the international search (name of data base and, where practicable, search terms used)

| C.  DOCUMENTS CONSIDERED TO BE RELEVANT | | |
|---|---|---|
| Category* | Citation of document, with indication, where appropriate, of the relevant passages | Relevant to claim No. |
| X | JP 2004-276240 A  (Idemitsu Unitech Co., Ltd.), 07 October 2004 (07.10.2004), claims 1, 4; paragraphs [0011], [0033] (Family: none) | 1-5 |
| A | JP 2003-236833 A  (Chisso Corp.), 26 August 2003 (26.08.2003), claims 1 to 4 (Family: none) | 1-5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 April, 2011 (13.04.11) | 26 April, 2011 (26.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 546 056 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3725955 B
- JP 4237275 B
- JP 2006297876 A